# EUROPÄISCHE PATENTANMELDUNG

(11) **EP 1 375 206 A2**
(43) Veröffentlichungstag der Anmeldung: **02.01.2004**
(21) Anmeldenummer: 03007744.0
(22) Anmeldetag: 04.04.2003
(51) Int. Cl.: B60G 17/052, B60C 23/00

(54) **Reifendruckkontrollvorrichtung für ein Kraftfahrzeug**

(30) Priorität: 20.06.2002 DE 10227642
(71) Anmelder: Continental Aktiengesellschaft, 30165 Hannover (DE)
(72) Erfinder: Grotendorst, Jörg, 30823 Garbsen (DE); Dreilich, Ludwig, Dr., 31535 Neustadt (DE)

(57) **Zusammenfassung**

Reifendruckkontrollvorrichtung für ein Kraftfahrzeug, mit der der Luftdruck mindestens eines Luftreifens des Kraftfahrzeuges überwacht wird und von der ein Signal abgegeben wird, wenn der Luftdruck in mindestens einem Reifen des Kraftfahrzeuges einen unteren Schwellenwert unterschreitet oder einen oberen Schwellenwert überschreitet, wobei der untere und/ oder der obere Schwellenwert in Abhängigkeit vom Beladungszustand des Kraftfahrzeuges festgelegt wird, wobei der Beladungszustand mit Hilfe einer Luftfederungsanlage ermittelt wird und die Festlegung mit Hilfe des ermittelten Beladungszustandes automatisch erfolgt.

## Beschreibung

Die Erfindung betrifft eine Reifendruckkontrollvorrichtung für ein Kraftfahrzeug, mit der der Luftdruck mindestens eines Luftreifens des Kraftfahrzeuges überwacht wird und von der ein Signal abgegeben wird, wenn der Luftdruck in mindestens einem Reifen des Kraftfahrzeuges einen unteren Schwellenwert unterschreitet oder einen oberen Schwellenwert überschreitet.

Der richtige Reifendruck in den Luftreifen eines Kraftfahrzeuges ist unter mehreren Aspekten von hoher Bedeutung. So führt z. B. ein zu niedriger Luftdruck in den Reifen zu einem erhöhten Rollwiderstand und damit zu einem erhöhten Kraftstoffverbrauch des Kraftfahrzeuges und darüber hinaus zu einer erhöhten Abnutzung der Reifen. Im schlimmsten Fall, wenn der Luftdruck in einem Reifen des Kraftfahrzeuges stark abgesunken ist, kann es sogar dazu kommen, dass sich der Reifen aufgrund des erhöhten Rollwiderstandes stark erhitzt und platzt. Unfälle, die auf geplatzte Reifen zurückzuführen sind, haben meistens schwerwiegende Folgen, so dass sie möglichst zu vermeiden sind. Auch ein zu hoher Luftdruck in den Reifen des Kraftfahrzeuges ist als nachteilig anzusehen. So führt dieser dazu, dass der Reifen nicht mehr mit seiner gesamten Bodenaufstandsfläche auf dem Untergrund aufliegt, sondern nur noch mit einem Teil der Bodenaufstandsfläche. Dies hat eine erhöhte Abnutzung des Reifens und eine Beeinträchtigung der Fahrsicherheit zur Folge.

Aus den oben genannten Gründen verfügen moderne Kraftfahrzeuge häufig über eine Reifendruckkontrollvorrichtung, von der der Luftdruck in den Reifen des Kraftfahrzeuges überwacht und ein Signal abgegeben wird, wenn der Luftdruck in mindestens einem der Reifen des Kraftfahrzeuges einen unteren Schwellenwert unterschreitet oder einen oberen Schwellenwert überschreitet. Der Fahrer hat dann die Möglichkeit, den Luftdruck so zu regulieren, dass er wieder zwischen den Schwellenwerten liegt. Bei den meisten Reifendruckkontrollvorrichtungen werden die Schwellenwerte unabhängig vom Fahrzeuggewicht bzw. Beladungszustand des Kraftfahrzeuges festgelegt.

Es gibt jedoch auch Reifendruckkontrollvorrichtungen, in die die Schwellenwerte manuell eingegeben werden können, so dass diese an das Fahrzeuggewicht bzw. den Beladungszustand des Kraftfahrzeuges angepasst werden können. Dies ist insofern sinnvoll, als dass bei einem hohen Fahrzeuggewicht (d. h. bei einem hohen Beladungszustand des Kraftfahrzeuges) der untere und der obere Schwellenwert erhöht und bei einem niedrigen Fahrzeuggewicht (d. h. bei einem niedrigen Beladungszustand) erniedrigt werden sollten, um den Beladungszsutand zu berücksichtigen. Es ist festzustellen, dass durch Reifendruckkontrollvorrichtungen, bei denen eine manuelle Eingabe der Schwellenwerte möglich ist, die Sicherheit des Kraftfahrzeuges gesteigert werden kann, da bei einer Warnung der Reifendruckkontrollvorrichtung an den Fahrer der Beladungszustand des Kraftfahrzeuges berücksichtigt wird. Häufig jedoch verbleibt die Anpassung der Schwellenwerte durch den Fahrer aus unterschiedlichen Gründen, so dass der theoretisch denkbare Sicherheitsgewinn zunichte gemacht wird.

Der Erfindung liegt die Aufgabe zugrunde, eine Reifendruckkontrollvorrichtung für ein Kraftfahrzeug zu schaffen, die jederzeit eine hohe Sicherheit des Kraftfahrzeuges im Hinblick auf die Überwachung des Luftdruckes in den Reifen des Kraftfahrzeuges gewährleistet.

Gemäß den kennzeichnenden Merkmalen des Anspruches 1 wird die Aufgabe dadurch gelöst, dass der untere und/oder der obere Schwellenwert in Abhängigkeit vom Beladungszustand des Kraftfahrzeuges festgelegt wird, wobei der Beladungszustand mit Hilfe einer Luftfederungsanlage ermittelt und die Festlegung mit Hilfe des ermittelten Beladungszustandes automatisch erfolgt.

Der Vorteil der Erfindung ist insbesondere darin zu sehen, dass der aktuelle Beladungszustand des Kraftfahrzeuges bei der Festlegung der Schwellenwerte in der Reifendruckkontrollvorrichtung immer berücksichtigt wird, so dass eine hohe Überwachungssicherheit durch die Reifendruckkontrollvorrichtung und damit eine hohe Sicherheit des Kraftfahrzeuges gewährleistet ist. Ein weiterer Vorteil der Erfindung ist darin zu sehen, dass die Festlegung der Schwellenwerte in Abhängigkeit vom mit der Luftfederungsanlage des Kraftfahrzeuges ermittelten Beladungszustand in der Reifendruckkontrollvorrichtung automatisch erfolgt. Eine manuelle Anpassung an den Beladungszustand ist nicht notwendig, so dass die eingangs erläuterten Sicherheitsmängel nicht auftreten können. Ein weiterer Vorteil der Erfindung ist darin zu sehen, dass mit der Luftfederungsanlage eine weitgehend exakte Bestimmung des Beladungszustandes möglich ist und somit eine genaue Anpassung der Schwellenwerte möglich ist. Demnach besteht nicht die Gefahr, dass willkürlich zu hohe oder zu niedrige Schwellenwerte festgelegt werden, die aufgrund zu später Warnungen zu einem unerwünschten erhöhten Reifenverschleiß führen können.

Gemäß einer Weiterbildung der Erfindung nach Anspruch 2 erfolgt eine erneute Festlegung des unteren und/oder des oberen Schwellenwertes bei jeder Inbetriebnahme des Kraftfahrzeuges. Der Vorteil dieser Weiterbildung wird verständlich, wenn man bedenkt, dass sich der Beladungszustand des Kraftfahrzeuges signifikant in den allermeisten Fällen nur während des Stillstandes des Kraftfahrzeuges durch Zuladung oder Entladung verändert. Der Vorteil der Weiterbildung ist also darin zu sehen, dass eine erneute Festlegung der Schwellenwerte nur dann erfolgt, wenn sich der Beladungszustand des Kraftfahrzeuges während dessen Stillstand verändert haben könnte. Unnötige Berechnungen der Schwellenwerte während der Fahrt des Kraftfahrzeuges unterbleiben somit.

Gemäß einer Weiterbildung der Erfindung nach Anspruch 3 erfolgt eine erneute Festlegung des unteren und/oder des oberen Schwellenwertes nur dann, wenn der aktuelle Beladungszustand über einen vorgegebenen Betrag hinaus von dem Beladungszustand abweicht, für den die Schwellenwerte zuletzt festgelegt worden sind. Der Vorteil dieser Weiterbildung ist darin zu sehen, dass eine erneute Festlegung der Schwellenwerte nur dann erfolgt, wenn der Beladungszustand sich spürbar verändert hat. Kleine Veränderungen, die z. B. auf den Kraftstoffverbrauch des Kraftfahrzeuges zurückzuführen sind, führen nicht zu einer erneuten Festlegung der Schwellenwerte. Der vorgegebene Betrag für die Abweichung des Beladungszustandes kann absolut oder prozentual anhand eines durchschnittlichen Beladungszustandes des Kraftfahrzeuges vorgegeben werden, anhand dessen die Schwellenwerte in der Reifendruckkontrollvorrichtung des Kraftfahrzeuges kalibriert sind (z. B. kann der vorgegebene Betrag 5 % bis 25 % des durchschnittlichen Beladungszustandes betragen. Wird z. B. ein Wert von 5 % vorgegeben, so erfolgt eine erneute Festlegung der Schwellenwerte erst dann, wenn der aktuelle Beladungszustand um mehr als 5 % von dem Beladungszustand abweicht, für den die Schwellenwerte zuletzt festgelegt worden sind).

Gemäß einer Weiterbildung der Erfindung nach Anspruch 4 verfügen die Reifendruckkontrollvorrichtung und die Luftfederungsanlage jeweils über eine Zentraleinheit, wobei der Beladungszustand in der Zentraleinheit der Luftfederungsanlage bestimmt wird und dann an die Zentraleinheit der Reifendruckkontrollvorrichtung übermittelt wird, in der die Schwellenwerte bestimmt werden. Der Vorteil dieser Weiterbildung ist darin zu sehen, dass auch Kraftfahrzeuge, die bereits über eine Reifendruckkontrollvorrichtung und eine Luftfederungsanlage verfügen, noch an die Erfindung angepasst werden können. Ein weiterer Vorteil der Weiterbildung ist darin zu sehen, dass das eine System auch noch dann funktionstüchtig ist, wenn die Zentraleinheit des anderen Systems ausfällt.

Gemäß einer Weiterbildung der Erfindung nach Anspruch 5 verfügt die Reifendruckkontrollvorrichtung über Mittel, mit denen der Luftdruck in mindestens einem Reifen des Kraftfahrzeuges geregelt werden kann, wobei eine Regelung erfolgt, wenn der Luftdruck den unteren Schwellenwert unterschreitet oder den oberen Schwellenwert überschreitet. Hierbei erfolgt die Regelung so, dass nach der Regelung der Luftdruck in dem entsprechenden Reifen wieder zwischen den Schwellenwerten liegt. Der Vorteil der Weiterbildung ist darin zu sehen, dass eine Anpassung des Luftdruckes in den Reifen automatisch erfolgt und nicht vom Fahrer vorgenommen werden muss. Demnach weist das Kraftfahrzeug jederzeit die maximal mögliche Sicherheit im Hinblick auf den Luftdruck in den Reifen des Kraftfahrzeuges auf.

Gemäß einer Weiterbildung der Erfindung nach Anspruch 6 werden in der Reifendruckkontrollvorrichtung die Schwellenwerte anhand eines durchschnittlichen Beladungszustandes des Kraftfahrzeuges festgelegt, wenn nach einer bestimmten Zeitspanne (gerechnet von der letzten Übermittlung des aktuellen Beladungszustandes an) keine neuen aktuellen Beladungszustände von der Reifendruckkontrollvorrichtung empfangen werden. Der Vorteil dieser Weiterbildung ist darin zu sehen, dass eine Festlegung der Schwellenwerte, die für viele Fahrsituationen des Kraftfahrzeuges akzeptabel sind, anhand des durchschnittlichen Beladungszustandes des Kraftfahrzeuges auch dann erfolgt, wenn von der Luftfederungsanlage keine aktuellen Beladungszustände ermittelt und an die Reifendruckkontrollvorrichtung weitergegeben werden (weil z. B. der Übertragungskanal zwischen der Zentraleinheit der Luftfederungsanlage und der Zentraleinheit der Reifendruckkontrollvorrichtung gestört oder zerstört ist). Als Zeitspanne kann ein Zeitraum festgelegt werden, der zwischen einem und zehn, vorzugsweise zwischen fünf und zehn Tagen, liegt.

Ein Ausführungsbeispiel und weitere Vorteile der Erfindung werden im Zusammenhang mit der nachstehenden Figur erläutert, die in stark schematisierter Darstellung ein Kraftfahrzeug zeigt, wobei nur die für nachfolgenden Erläuterungen wesentlichen Bestandteile gezeigt sind.

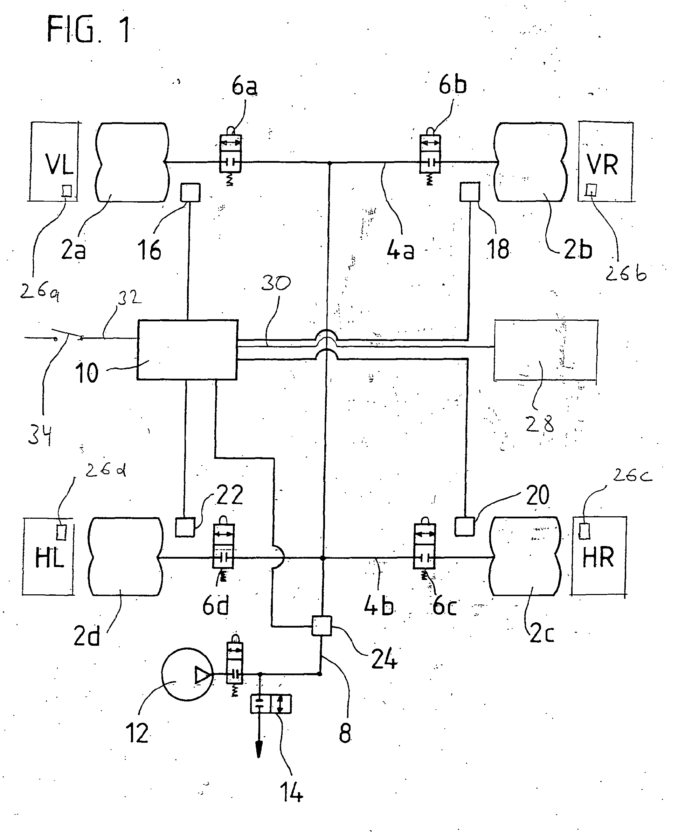

Die Figur zeigt eine Luftfederunganlage, mit der das Niveau des (nicht gezeigten) Fahrzeugaufbaus des Kraftfahrzeuges gegenüber den Achsen des Kraftfahrzeuges geregelt werden kann. Die Luftfederungsanlage verfügt dazu u. a. über Luftfedern 2a bis 2d, über Höhensensoren 16 bis 22, von denen jeweils einer einer Luftfeder 2a bis 2d zugeordnet ist, eine Zentraleinheit 10 und über einen Kompressor 12. Wie mit Hilfe einer solchen Luftfederungsanlage das Niveau des Fahrzeugaufbaus geregelt wird, ist allgemein bekannt und z. B. in der DE 100 17 506 A1 beschrieben.

Das Kraftfahrzeug verfügt ferner über eine Reifendruckkontrollvorrichtung mit Reifendrucksensoren 26a bis 26d, von denen jeweils einer den Reifen vorne links, vorne rechts, hinten links und hinten rechts zugeordnet ist. Für den Reifendrucksensoren 26a bis 26d wird der Luftdruck in den entsprechenden Reifen des Kraftfahrzeuges gemessen und an die Zentraleinheit 28 der Reifendruckkontrollvorrichtung übermittelt. In der Zentraleinheit 28 wird überprüft, ob der von einem Reifendrucksensor 26a bis 26d übermittelte Luftdruck einen unteren Schwellenwert unterschreitet oder einen oberen Schwellenwert für den Luftdruck überschreitet. In diesem Fall wird eine Warnung an den Kraftfahrzeugfahrer abgegeben, so dass dieser den Luftdruck in dem entsprechenden Reifen so anpassen kann, dass er zwischen den Schwellenwerten liegt. Gegebenenfalls wird der Luftdruck in dem Reifen in der genannten Art und Weise auch automatisch korrigiert, wenn die Reifendruckkontrollvorrichtung über entsprechende Mittel verfügt. Entsprechende Reifendruckkontrollvorrichtungen sind bekannt, so dass hier nicht näher auf sie eingegangen werden soll.

Mit der Luftfederungsanlage lässt sich auch das Fahrzeuggewicht des Kraftfahrzeuges bestimmen, wie es im einzelnen in der DE 100 17 506 A1 erläutert ist. Der Beladungszustand des Kraftfahrzeuges ergibt sich aus der Differenz zwischen dem aktuellen Fahrzeuggewicht und dem Leergewicht des Kraftfahrzeuges, das festgelegt ist (somit kann der aktuelle Beladungszustand des Kraftfahrzeuges äquivalent aus dem aktuellen Fahrzeuggewicht bestimmt werden). Der in der Zentraleinheit 10 der Luftfederungsanlage berechnete aktuelle Beladungszustand des Kraftfahrzeuges wird über die Signalleitung 30 an die Zentraleinheit 28 der Reifendruckkontrollvorrichtung übermittelt. In der Reifendruckkontrollvorrichtung werden aufgrund des übermittelten aktuellen Beladungszustandes der obere und/oder der untere Schwellenwert angepasst. Die Anpassung kann z. B. mittels einer in der Zentraleinheit 28 gespeicherten Tabelle erfolgen, in dem für unterschiedliche Beladungszustände des'Kraftfahrzeuges die dazugehörigen Schwellenwerte gespeichert sind. Finden sich in der Tabelle für einen bestimmten Beladungszustand keine Schwellenwerte, so können diese in der Zentraleinheit 28 z. B. durch lineare Regression aus den nächsten benachbarten Beladungszuständen und den dazugehörigen Schwellenwerten berechnet werden. Diese Anpassung erfolgt vorzugsweise dahingehend, dass bei einer Erhöhung des Beladungszustandes sowohl der untere als auch der obere Schwellenwert nach oben angepasst wird, und dementsprechend bei einer Erniedrigung des Beladungszustandes die beiden Schwellenwerte nach unten angepasst werden.

Eine erneute Festlegung der Schwellenwerte wird gemäß einer Ausführung der Erfindung bei jeder Inbetriebnahme des Kraftfahrzeuges vorgenommen. Die Zentraleinheit 10 der Luftfederungsanlage ist dazu über eine Signalleitung 32 mit dem Zündschloss 34 des Kraftfahrzeuges verbunden. Wird dieses betätigt, so liegt an der Signalleitung 32 z. B. eine 1 an und der Beladungszustand des Kraftfahrzeuges wird in der Zentraleinheit 10 ermittelt und an die Zentraleinheit 28 übertragen. Dort wird eine Anpassung der Schwellenwerte vorgenommen, wenn sich seit der letzten Inbetriebnahme der Beladungszustand geändert hat.

Wird der Zündschlüssel des Kraftfahrzeuges abgezogen, so öffnet sich das Zündschloss und an der Signalleitung 32 liegt eine 0 an. Bei einer erneuten Betätigung des Zündschlosses liegt an der Signalleitung 32 wieder eine 1 an, so dass in der Zentraleinheit 10 der Beladungszustand erneut bestimmt wird. Alternativ kann das Zündschloss auch mit der Zentraleinheit 28 der Reifendruckkontrollvorrichtung verbunden sein.

Gemäß einem weiteren Ausführungsbeispiel der Erfindung erfolgt eine Anpassung der Schwellenwerte nur dann, wenn der aktuelle Beladungszustand über einen vorgegebenen Betrag hinaus von dem Beladungszustand abweicht, für den die Schwellenwerte zuletzt festgelegt worden sind. Der vorgegebene Betrag kann entweder absolut oder prozentual angegeben werden. Ist z. B. ein Betrag von 50 kg vorgegeben, und sind in der Zentraleinheit 28 die Schwellenwerte zuletzt bei einem Beladungszustand von z. B. 200 kg festgelegt worden, so erfolgt eine erneute Festlegung der Schwellenwerte erst, wenn der Beladungszustand 150 kg unterschreitet bzw. 250 kg überschreitet. Entsprechendes gilt, wenn der Betrag prozentual vorgegeben wird.

Kann nach der letzten Übermittlung des aktuellen Beladungszustandes von der Zentraleinheit 10 zu der Zentraleinheit 28 nach einer bestimmten vorgegebenen Zeitspanne kein neuer aktueller Beladungszustand in der Zentraleinheit 28 empfangen werden, so werden in der Zentraleinheit 28 der Reifendruckkontrollvorrichtung die Schwellenwerte anhand eines dort gespeicherten durchschnittlichen Beladungszustandes des Kraftfahrzeuges festgelegt. Die Überwachung der Zeitspanne erfolgt in der Zentraleinheit 28.

Es ist möglich, in der Zentraleinheit 28 der Reifendruckkontrollvorrichtung für jeden einzelnen Reifen des Kraftfahrzeuges einen ihm zugeordneten unteren und oberen Schwellenwert festzulegen. Es ist ebenfalls möglich, für die Reifen, die der Vorderachse zugeordnet sind, einen gemeinsamen unteren und einen gemeinsamen oberen Schwellenwert festzulegen und für die Reifen der Hinterachse einen gemeinsamen anderen unteren und oberen Schwellenwert festzulegen. (Die Festlegung kann auch in diesen Fällen mit den o. g. Tabellen erfolgen, wobei dann für jedes Rad bzw. für jede Achse in der Zentraleinheit 28 eine entsprechende Tabelle gespeichert ist). Hiervon wird in modernen Kraftfahrzeugen häufig Gebrauch gemacht, in denen meistens für die Reifen der Vorderachse niedrigere Schwellenwerte berücksichtigt werden als für die Reifen der Hinterachse des Kraftfahrzeuges. Werden für die einzelnen Reifen oder für die Reifen einer Achse unterschiedliche Schwellenwerte festgelegt, so übermitteln die Reifendrucksensoren 26a bis 26d individuelle Kennungen an die Zentraleinheit 28, anhand der die Zentraleinheit 28 erkennen kann, von welchem Reifen aus die aktuellen Luftdruckwerte übermittelt worden sind.

### Bezugszeichenliste

- 2a, 2b, 2c, 2d: Luftfedern
- 4a, 4b: Querleitung
- 6a, 6b, 6c, 6d: Quersperrventile
- 8: Leitung
- 10: Zentraleinheit
- 12: Kompressor
- 14: Ablassventil
- 16, 18, 20, 22: Höhensensoren
- 24: Drucksensor
- 26a - d: Reifendrucksensoren
- 28: Zentraleinheit
- 30: Signalleitung
- 32: Signalleitung
- 34: Zündschloss

## Patentansprüche

1. Reifendruckkontrollvorrichtung für ein Kraftfahrzeug, mit der der Luftdruck mindestens eines Luftreifens des Kraftfahrzeuges überwacht wird und von der ein Signal abgegeben wird, wenn der Luftdruck in mindestens einem Reifen des Kraftfahrzeuges einen unteren Schwellenwert unterschreitet oder einen oberen Schwellenwert überschreitet,
**dadurch gekennzeichnet, dass** der untere und/ oder der obere Schwellenwert in Abhängigkeit vom Beladungszustand des Kraftfahrzeuges festgelegt wird, wobei der Beladungszustand mit Hilfe einer Luftfederungsanlage ermittelt wird und die Festlegung mit Hilfe des ermittelten Beladungszustandes automatisch erfolgt.

2. Reifendruckkontrollvorrichtung nach Anspruch 1, **dadurch gekennzeichnet, dass** eine erneute Festlegung des unteren und/ oder des oberen Schwellenwertes bei jeder Inbetriebnahme des Kraftfahrzeuges erfolgt.

3. Reifendruckkontrollvorrichtung nach Anspruch 1, **dadurch gekennzeichnet, dass** eine erneute Festlegung des unteren und/ oder des oberen Schwellenwertes nur dann erfolgt, wenn der aktuelle Beladungszustand über einen vorgegebenen Betrag hinaus von dem Beladungszustand abweicht, für den die Schwellenwerte zuletzt festgelegt worden sind.

4. Reifendruckkontrollvorrichtung nach einem der Ansprüche 1 bis 3, **dadurch gekennzeichnet, dass** die Reifendruckkontrollvorrichtung und die Luftfederungsanlage jeweils über eine Zentraleinheit verfügen und der Beladungszustand in der Zentraleinheit der Luftfederungsanlage bestimmt wird und dann an die Zentraleinheit der Reifendruckkontrollvorrichtung übermittelt wird, in der die Schwellenwerte bestimmt werden.

5. Reifendruckkontrollvorrichtung nach einem der Ansprüche 1 bis 4, **dadurch gekennzeichnet, dass** die Reifendruckkontrollvorrichtung über Mittel verfügt, mit denen der Luftdruck in mindestens einem Reifen des Kraftfahrzeuges geregelt werden kann, und dass eine Regelung erfolgt, wenn der Luftdruck den unteren Schwellenwert unterschreitet oder den oberen Schwellenwert überschreitet.

6. Reifendruckkontrollvorrichtung nach einem der Ansprüche 1 bis 5, **dadurch gekennzeichnet, dass** in der Reifendruckkontrollvorrichtung der untere und/oder der obere Schwellenwert anhand eines durchschnittlichen Beladungszustandes des Kraftfahrzeuges festgelegt werden, wenn nach einer bestimmten Zeitspanne keine aktuellen Beladungszustände von der Reifendruckkontrollvorrichtung empfangen werden.
